# EUROPEAN PATENT SPECIFICATION

(11) **EP 2 670 757 B1**
(45) Date of publication and mention of the grant of the patent: **27.05.2015**
(21) Application number: 12703746.3
(22) Date of filing: 01.02.2012
(51) Int. Cl.: C07F 7/08

(54) **SILICONE CONTAINING MONOMERS WITH HYDROPHILIC END GROUPS**
SILIKONHALTIGE MONOMERE MIT HYDROPHILEN ENDGRUPPEN
SILICONE CONTENANT DES MONOMÈRES PORTANT DES GROUPES TERMINAUX HYDROPHILES

(30) Priority: 01.02.2011 US 201113019279; 14.09.2011 US 201113232849
(43) Date of publication of application: 11.12.2013
(73) Proprietor: DSM IP Assets B.V., 6411 TE Heerlen (NL)
(72) Inventor: WANG, Shanger, NL-6100 AA Echt (NL); JIANG, Xuwei, NL-6100 AA Echt (NL); TIAN, Yuan, NL-6100 AA Echt (NL)
(74) Representative: Andrae | Westendorp Patentanwälte Partnerschaft
(86) International application number: PCT/EP2012/051689
(87) International publication number: WO 2012/104349

(56) References cited:
- WO-A2-2010/147779
- KOLLMEIER H-J ET AL: "Organo-Polysiloxan Copolymere", GOLDSCHMIDT INFORMIERT, GOLDSCHMIDT, ESSEN, DE, vol. 4, no. 63, 1 December 1984 (1984-12-01), pages 41-48, XP002363824, ISSN: 0340-8507

## Description

### BACKGROUND OF THE INVENTION

To design and select materials for biomedical devices such as contact lenses, many factors must be considered to optimize the physical, chemical and biological properties. Examples of these properties include oxygen permeability, wettability, biocompatibility, physical strength, modulus, and optical requirements, to name just a few. Due to their high oxygen permeability, silicone based materials have been used extensively in silicone hydrogel contact lens manufacturing. However, silicone is a hydrophobic material, and for this reason silicone contact lenses tend to develop a relatively hydrophobic, non-wettable surface in contact with hydrophobic lens molds during manufacturing. The optical clarity may be compromised if the phase separation of hydrophobic silicone from hydrophilic components in lens formulation, and in a final lens saturated with aqueous media, occurs. In addition, lipids and proteins have a high tendency to deposit on a hydrophobic surface and affect optical clarity.

Various methods have been used to render the contact lens surface with sustained hydrophilicity, a property that is critical to the wear comfort and cornea health. One of the common practices to increase the wettability is to add an internal wetting agent such as polyvinylpyrrolidone (PVP) or alter the surface with plasma, high energy irradiation and a topical coating to obtain an extremely hydrophilic surface. See for example, EP 713106 A1 and EP 2089069 A1 . A plasma treatment can be effective toward non-hydrogel lenses, but has limited success in hydrogel lenses due to destruction of the plasma coating and lens deformation during hydration, a process that leads to a tremendous volume increase. The volume increase is an increase in lens volume due to the absorption of water during hydration. Topical coatings can effectively alter the surface properties but also introduce an additional step in manufacturing which is often complex in nature.

Others have tried to increase the surface wettability by adding hydrophilic monomers in the lens formulation. Ionic monomers such as acrylate or methacrylate with zwitterionic groups including sulfobetaine (see e.g., US 6733123, US 2005/0191335 and US 5936703), carboxy betaine (see e.g., JP 6067122, US 6590051 and EP 1760098A1), and carboxy betaine ester (see e.g., WO 2008/066381A1) are often highly hydrophilic, capable of retaining tear film and reducing lipid or protein deposition, however these zwitterionic group-containing monomers are generally solid and extremely poor in solubility with not only many hydrophilic monomers but also, in particular, hydrophobic monomers such as silicone monomers essential for the oxygen permeability in silicone hydrogel lenses. They are incompatible with other components in lens formulation and, therefore, have a limited amount of usage or they will precipitate or phase separate from the monomer mixture and affect optical transparency.

Non-ionic hydrophilic monomers have been used to render contact lenses with hydrophilicity, examples of which include 2-hydroxyethyl methacrylate, N-vinyl pyrrolidone, and dimethylacrylamide. Other reactive monomers or prepolymers were also reported to provide internal wetting capability (see, WO 2006039466 A1). Still, a careful balance of these hydrophiles with other components in lens formulation is necessary, especially for silicone hydrogel lenses in order to balance oxygen permeability, wettability and physical properties and often have limitations in optimizing overall lens performance without sacrificing other properties one way or the other.

On the other hand, hydrophilicity and compatibility with silicone containing monomers can be improved by introducing a hydrophilic group to the silicone containing molecules or macromers. For example, US2008/0015282A1 describes mono-functional and di-functional hydroxyl-containing silicone monomers for improving the wettability and compatibility of silicone hydrogel lenses. The hydroxyl groups are attached to the molecules between a polymerizable functional group and silicone component. This arrangement may not be optimal in providing the best outcome for improving surface wettability due to the restrictions on the hydroxyl group from neighboring groups for them to move, orient and present themselves at the surface.

Copolymers containing zwitterionic groups were prepared from a prepolymer of silicone monomer and tertiary amine containing monomer by grafting with various zwitterionic agents to produce more compatible lenses, but the process lacks reproducibility (US 6346594B1).

WO2006/039466A1,discloses wettable silicone hydrogels that comprise a hydrophobic silicone component and a hydrophilic component as an internal wetting agent to improve the wettability. However, the molecular structure and functionality of the silicone hydrogels are difficult to reproduce from batch to batch, and extensive characterization is often necessary to ensure the consistency and high yield of lens manufacturing.

WO 2010/147779 A2 discloses polymerizable silicone compounds comprising a zwitterionic phosphorylcholine group and at least one vinyl endgroup for use in topical and internal applications as components in biomedical devices.

US 20100016514A1 describes a silicone hydrogel contact lens containing a non-crosslinkable hydrolyzable polymer, wherein the hydrolyzable polymer is capable of converting into a hydrophilic polymer upon hydration, thereby imparting to the silicone hydrogel contact lens a hydrophilic surface without the need of a post-curing surface treatment.

The aforementioned publications disclose how to incorporate a hydrophilic monomer into a reactive monomer mix or more preferably how to incorporate a hydrophilic monomer into a macromer or prepolymer so that a homogeneous monomer mix and optically clear lens can be produced. Adding a hydrophilic monomer or a macromer to a monomer mix may improve certain aspects of lens properties, but it can only reach the results by simple rule of addition, i.e. the degree of improvement is linearly proportional to the amount of hydrophilic monomer present in the final material. To a set of often contradicting parameters including oxygen permeability, optical clarity, optimal modulus and water content, lubricity, ability to retain tear film fluid and resist nonspecific protein and lipid adsorption, the desired level of performance (such as wettability) may not be realized before running into the limitation and adversely leads to undesirable results for other properties (such as phase separation and resulting cloudiness). There is a need to provide a material that can effectively enhance certain aspects of performance without limitations from otherwise constraining or contradicting parameters.

Local surface treatments using a coating composition containing hydrophilic zwitterionic groups can be applied to achieve desired surface characteristics, but often these treatments involve the use of a pre-made coating composition, are difficult to repeat and can hardly warrant the chemical bonding between crosslinked hydrogel matrices and topical coatings applied. A plasma treatment can alter the surface from hydrophobic to hydrophilic but requires extensive process development and offers limited benefits on the surface only. There is a need to provide a material that offers both bulk (oxygen permeability, mechanical properties, optical clarity) and surface advantages (wettability, lubricity, and biocompatibility).

### SUMMARY OF THE INVENTION

It is therefore the objective of the present invention to provide a silicone containing monomer with a hydrophilic group covalently attached to improve the bulk and surface properties of medical devices. A hydrophilic group is a group that is attracted to water..

It is the further objective of the present invention to provide a silicone containing monomer with a hydrophilic group attached to the terminal end and away from the polymerizable group such that upon polymerization and formation of the devices comprising the polymerized material the hydrophilic groups attached to the side chain end maintain a high degree of mobility and are capable of migrating to the surface preferentially in contacting with body fluid.

Groups that can migrate to the surface are here and hereafter also referred to as surface modifying groups. The monomers according to the present invention comprise hydrophilic groups that are capable to migrate from the bulk to the surface and to thereby modify the surface. The hydrophilic groups on the surface create a wettable surface rich in hydrophilic end groups; preferably a surface that contains 10 mol% more of hydrophilic groups than the bulk; more preferably 50 mol% more than the bulk, even more preferably 80 mol% more hydrophilic groups than the bulk.

It is the objective of the present invention to provide hydrophilic silicone containing monomers, and macromers and polymers made thereof having improved hydrophilicity.

It is the further objective of the present invention to provide articles including medical devices and ophthalmic devices with a surface having enhanced wettablility, lubricity, and biocompatibility.

Here and hereafter an end group is defined as a group attached to the terminal end of a monomer. The terminal end of a monomer here and hereafter is defined as the end of the monomer that does not carry a polymerizable group.

A polymerizable group is here and hereafter defined as a polymerizable group selected from groups that can undergo free radical and/or cationic polymerization, condensation polymerization, ring opening polymerization and the like. As radical polymerization is predominately used in lens manufacturing, the preferred polymerizable groups are free radical reactive groups including (meth)acrylates, styryls, vinyls, vinyl ethers, C1-6 alkyl(meth)acrylates, (meth)acrylamides, C1-6 alkyl(meth)acrylamides, N-vinyllactams, N-vinylamides. More preferably, the polymerizable groups comprise (meth)acrylate, acryloxy, (meth)acrylamide, and mixtures thereof. As used herein "(meth)acrylate" includes both acrylate and methacrylate. As used herein "(meth)acryl amide" includes both acrylamide and methacrylamide.

Here and hereafter when groups are described as, for instance, C1-C4 groups, this means groups with one to four carbon atoms; or C1-C6, means groups with one to six carbon atoms.

The present invention relates to a silicone containing monomer comprising a non-ionic end group according to formula (II): 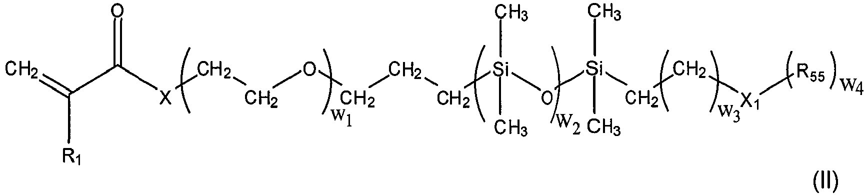 wherein, R₁ is H or CH₃, X is O or NR₅₄, where R₅₄ is H or a monovalent alkyl group with 1 to 4 carbons, W₁ is an integer from 0 to 10, W₂ is an integer from 2 to 100, W₃ is an integer from 1 to 6, X₁ is O or N, R₅₅ is H, ethanol (-CH₂CH₂OH), glycerol (-CH₂CH(OH)CH₂(OH)), and W₄ is 1 when X₁ is O; and R₅₅ is ethanol (-CH₂CH₂OH), straight or branched alkyl groups having 1 to 6 carbon atoms, aliphatic polyether, and W₄ is 2 when X₁ is N.

In a different embodiment there is a silicone containing monomer comprising an ionic end group according to formula (IV): 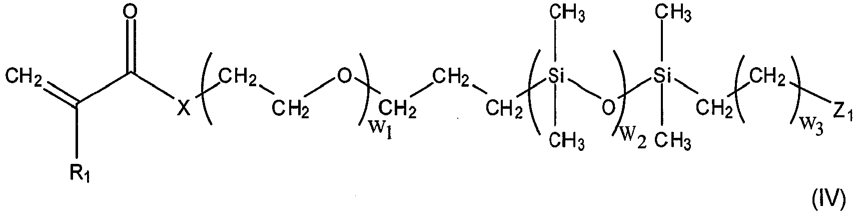 wherein, R₁ is H or CH₃, X is O or NR₅₄, where R₅₄ is H or a monovalent alkyl group with 1 to 4 carbons, W₁ is an integer from 0 to 10, W₂ is an integer from 2 to 100, W₃ is an integer from 1 to 6, and Z₁ comprises:
a zwitterionic group according to formula (IV-C): 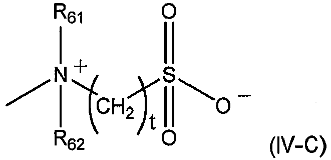
wherein R₆₁, R₆₂ are each independently selected from hydrogen or C1 to C4 alkyl, and t is an integer from 1 to 4; or formula (IV-D): 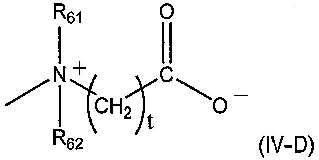
wherein R₆₁, R₆₂ are each independently selected from hydrogen or C1 to C4 alkyl, t is an integer from 1 to 4; or formula (IV-E): 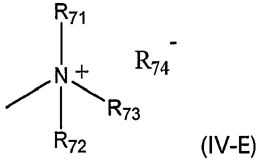
wherein (1) R₇₄ is a halide anion, sulfonate anion; (2) R₇₁, R₇₂, R₇₃ are each independently selected from the group consisting of straight or branched alkyl groups having 1 to 22 carbon atoms and substituted or unsubstituted phenyl or benzyl rings, aliphatic esters, aliphatic polyether, fluorinated aliphatic polyether, silicone, silicone polyether; (3) R₇₂, R₇₃ may either be (a) taken together with N to form a saturated or unsaturated heterocyclic ring of from 5 to 7 atoms; (b) taken together with N, and combined with oxygen atom to form N-morpholino group; or where (4) R₇₁, R₇₂, R₇₃ and N, taken together, represent quinoline, isoquinoline or hexamethylene tetramine.

Methods of synthesizing silicone containing monomers with a hydrophilic end groups comprising the steps of first hydrosilylation reaction between a silicone di-hydride and a vinyl functional hydrophile at the presence of a suitable hydrosilylation catalyst including the ones known to a person skilled in the art including Karstedt catalyst, Wilkinson's catalyst to provide mono silane and subsequent hydrosilylation reaction of the resulting mono silane with a vinyl functional monomer containing a polymerizable group are further disclosed.

The process of producing silicone containing reactive monomers with hydrophilic end-groups of formula (I) may include two steps of hydrosilylation reactions: a first step of reacting, in the presence of a hydrosilylation catalyst, a first reaction mixture comprising one disilane and at least one hydrophilic group containing or hydrophilic group forming compound with a vinyl functional group capable of performing a hydrosilylation reaction to produce a monosilane, and a second step of reacting resulting mono silane with a vinyl functional monomer containing a polymerizable group in a solventless system or in organic solvents in the presence of a hydrosilylation catalyst and optionally in the presence of a polymerization inhibitor.

Here and hereafter a disilane is defined as a silane molecule or a silicone molecule containing two Si-H bonds and a monosilane is defined as a silane molecule or a silicone molecule containing one Si-H bond.

The hydrophilic group may be protected temporary by a protecting agent and prior to the hydrosilylation reaction, and de-protected afterwards. A hydrophilic group forming compound is a compound capable of reacting with another compound to form a hydrophilic compound. In particular, the hydrophilic group forming compound may be selected from vinyl functional amines, vinyl functional epoxides, vinyl functional isocyanates.

The present invention also includes a composition comprising a mixture of a silicone containing monomer according to the present invention with at least one ethylenically unsaturated comonomer.

Typically these compositions can also include lubricants, wetting agents, and drugs.

Furthermore, another embodiment includes a composition comprising a polymer or polymer network produced by polymerization of a mixture of a silicone containing monomer with a hydrophilic end group as described above, with at least one ethylenically unsaturated co-monomer, lubricants, wetting agents, and drugs.

Another embodiment includes an article comprising a composition according to any of those embodiments disclosed above. In one embodiment, the article is an ophthalmic device.

Accordingly, the monomers produced according to the present invention are useful in producing articles, in particular ophthalmic devices, including ocular lens material that provides high oxygen permeability, good wettability and biocompatibility, and is compatible with a wide range of other components in lens formulation.

### DETAILED DESCRIPTION OF THE INVENTION

A hydrophilic silicone containing monomer of formula (I) is disclosed: 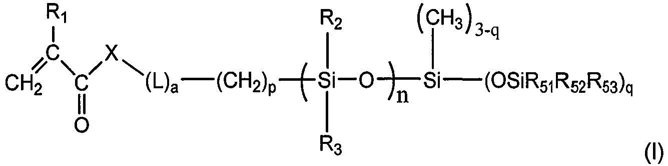 wherein R₁ is H or CH₃, a is 0 or 1, p is an integer from 1 to 6, q is an integer from 1 to 3 and for each q, the end groups R₅₁, R₅₂, R₅₃ are independently an alkyl, alkyl ether, urethane, trimethylsiloxy group, or a substituted or non-substituted aromatic group and at least one of them has a hydrophilic group Z attached, preferably to the terminal end of R₅₁, R₅₂, R₅₃, X is O or NR₅₄, where R₅₄ is H or a monovalent alkyl group with 1 to 4 carbons, n is an integer from 1 to 100, R₂ and R₃ is independently an alkyl, alkyl ether, trimethylsiloxy group, or a substituted or non-substituted aromatic group, preferred R₂ and R₃ include methyl, ethyl, trimethylsiloxy and phenyl, L is a divalent linker comprising substituted and unsubstituted alkylene groups having 1-14 carbon atoms, which may be straight or branched, substituted and unsubstituted alkoxy groups having 2-12 carbons, polyethers, oxazolines, substituted and unsubstituted heterocyclic groups.

The end groups R₅₁, R₅₂, R₅₃ may be alkyl or alkyl ether. Suitable alkyl groups are C1-C10 alkyl or C1-C10 alkyl ether, preferably C1-C5 alkyl or C1-C5 alkyl ether. Two endgroups R₅₁, R₅₂, R₅₃ may be methyl groups.

L may comprise a substituted alkoxy group or a substituted heterocyclic group. Suitable substituents include aryl, amine, ether, amide, hydroxyl groups, combinations thereof and the like. Alternatively, L comprises a straight or branched alkylene group having 2 to 12 carbons.

Alternatively, at least one of R₅₁, R₅₂, R₅₃ has a hydrophilic group Z attached to the terminal end. Alternatively, R₂ and R₃ are each independently selected from methyl, ethyl, trimethylsiloxy and phenyl.

Suitable terminal hydrophilic groups Z include a hydroxyl group, amino group, amino acid group, carboxylic acid group, C1-C6 aminoalkyl group, C1-C6 alkylaminoalkyl group, C1-C4 hydroxyalkyl group, C1-C6 hydroxyalkoxy group, quaternary amine group, sulfonate group, and zwitterionic group.

Alternatively, R₂ and R₃ are each independently selected from methyl, ethyl, trimethylsiloxy and phenyl.

Alternatively, L comprises a straight or branched alkylene group having 2 to 12 carbons and said hydrophilic groups Z are covalently attached to the terminal end of at least one of R₅₁, R₅₂, R₅₃. Alternatively, the terminal hydrophilic group Z is selected from a hydroxyl group, amino group, amino acid group, carboxylic acid group, C1-C6 aminoalkyl group, C1-C6 alkylaminoalkyl group, C1-C4 hydroxyalkyl group, C1-C6 hydroxyalkoxy group, quaternary amine group, sulfonate group, or zwitterionic group.

Alternatively, the hydrophilic groups Z can be covalently attached to the terminal end of at least one of R₅₁, R₅₂, R₅₃,

Alternatively, R₅₁, R₅₂, R₅₃, are each independently a monovalent group having a group molecular weight ranging from 15 to 4500 g/mol, preferably from 15 to 1500 g/mol.

Alternatively, L can be a polyethylene oxide with ethylene oxide unit between 0 to 12.

Also, p can be an integer from 2 to 3 and/or n is an integer from 1 to 20. Moreover, n can be an integer from 1 to 20.

The hydrophilic group can be a zwitterionic group.

A zwitterionic group is a hydrophilic group that carries a total net charge of zero with formal charges on different atoms, it is very polar by nature and has high solubility in water and is poorly soluble in most organic solvents. Examples of zwitterionic groups include most amino carboxylic acid groups (at physiological pH), amino-sulfonic acid groups, and betaines.

A betaine is any neutral chemical compound with a positively charged cationic group such as an quaternary ammonium or phosphonium cation which bears no hydrogen atom and with a negatively charged functional group such as a carboxylate group which may not be adjacent to the cationic site. A betaine thus may be a specific type of zwitterion.

The zwitterionic group may be a betaine group which includes but is not limited to sulfo-, carboxy-, and phosphor-betaine. In biological systems, many betaines serve as organic osmolytes, substances synthesised or taken up from the environment by cells for protection against osmotic stress, drought, high salinity or high temperature. Intracellular accumulation of betaines permits water retention in cells, thus protecting from the effects of dehydration. Learning from nature, it is thus expected that the inclusion of betaine in the lens material may provide not only better wettability but also water retention, the property that is critical for extending tear film breakup time (TBUT), defined as the interval between the last complete blink and the first appearance of a dry spot, or disruption in the tear film, and lens wearing comfort. The lipid components that constitute the cytoplasm membrane are mainly zwitterionic phospholipids and are believed to be nonthrombogenic, the presence of many zwitterionic groups inlcuding phosphorylcholine (PC), sulfobetaine, carboxybetaine, at the surface can lead to the dramatic reduction of nonspecific protein adsorption. It has been reported that the excellent wettability and lipid deposit resistance can be realized by reacting a zwitterionic group forming agent to the lens material (US6346594B1). In addition, a surface that comprises a zwitterionic group has also exhibited resistance to bacterial adhesion and biofilm formation (Gang Cheng, Zheng Zhang, Shengfu Chen, James D. Bryers, Shaoyi Jiang, Biomaterials 28 (2007) 4192-4199).

According to the present invention, the hydrophilic groups are covalently attached to the silicone containing monomer thereby increasing the solubility of the resulting monomer in a lens formulation. The amphiphilic nature of the silicone containing monomer thus produced can also be useful in compatablizing the polar and non-polar components in a lens formulation and in the final lens composition, thus improving the performance of oxygen permeability and optical clarity at the same time.

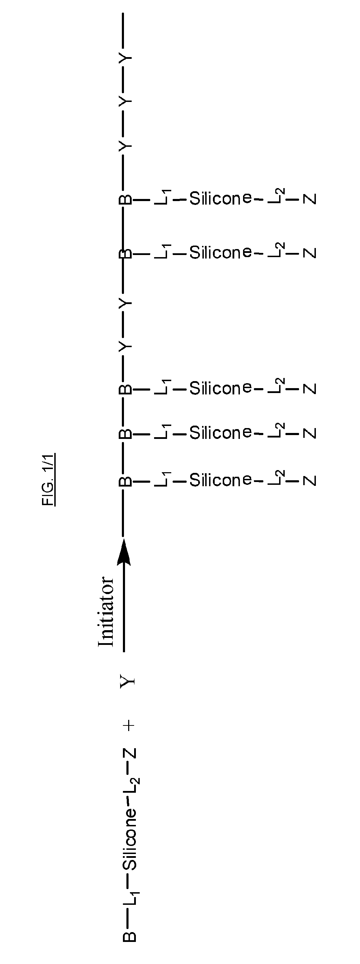

According to the present invention, a hydrophilic group Z can be attached to the silicone containing monomer at the terminal end and away from the polymerizable group B. Such arrangement is essential as it allows the hydrophilic end groups to move away from the backbone chain and hydrophobic silicone rich domain upon formation of the polymer or polymer network (A) (see Figure 1) and after hydration. It is understandable to one skilled in the art that such molecular scale (re)orientation may be driven by thermal dynamic factors and ionic interaction. As a result of the (re)orientation the surface concentration and spatial distribution of hydrophilic end groups will be enriched at the surface to achieve desired wettability and favorable biological response.

In Figure 1, B is a polymerizable group, preferably an ethylenically unsaturated group (equivalent to a C=C group), Z is an hydrophilic group, and Y is a co-monomer, crosslinker, macromer or prepolymer with one or more polymerizable groups as used in contact lens formulation, and a mixture thereof. The hydrophilic group Z comprises a hydroxyl group, carboxylic acid group, amino group, C1-C6 aminoalkyl group, C1-C6 alkylaminoalkyl group, C1-C4 hydroxyalkyl group, C1-C6 hydroxyalkoxy group, a quaternary amine group, sulfonate group, a zwitterionic group, and combinations thereof. L1 and L2 both are independently an alkyl, alkyl ether, or a substituted or non-substituted aromatic group which may be straight or branched, polyethers, oxazolines, substituted and unsubstituted heterocyclics.

Because the hydrophilic groups are attached at the polymer side chain ends, they possess a higher degree of mobility and under the hydrated conditions, are encouraged to move to the surface thereby effectively increasing the surface concentration and wettability. It can be understood for one skilled in the art that the surface concentration and spatial distribution of hydrophilic end groups will depend on the difference in polarity of hydrophilic end groups and the neighboring component including silicone segment, and the segmental mobility of the side chain comprising hydrophilic end group and the silicone segment. The higher the segmental mobility and the difference in polarity the more driving force and less restriction for the end group to segregate from the hydrophobic domain and be enriched at the device-biological interface. Such an increased distribution of hydrophilic end groups to the surface is beneficial to create a wettable surface and promote fluid film lubrication allowing the lens to move (refresh) when the user blinks. It further facilitates biological exchange of nutrients, oxygen and electrolytes and thus improves the balance of the physiological conditions.

The preferred distribution and surface segregation of hydrophilic end groups is achieved during standard processing steps in the manufacturing of a medical device. For contact lens manufacturing, processing may include curing, extraction, sterilization and packaging. During curing, the reactive monomer mixture is exposed to the hydrophobic lens mold and forms a crosslinked network upon curing. The hydrophobic silicone component, driven by the "like-attract-like," tends to move to the surface in contacting the mold and be enriched at the surface. After de-molding, the lens is exposed to an aqueous medium when subjected to extraction, sterilization and packaging. These treatments further promote the hydrophilic groups attached to the silicone to orient themselves to the outmost layer of the lens surface, herewith minimizing the surface energy. Such processing steps allow the redistribution of hydrophilic groups and create a surface layer that contains a minimum of 10% more of hydrophilic groups Z in comparison with the average concentration in the bulk, calculated by the mole percent of such group in the polymer composition, which may be approximated to that of the theoretical average. More preferably the difference between the concentration of the hydrophilic groups Z in the surface layer and the bulk is more than 30 mol% , even more preferably more than 50 mol%.

In the process of exposing the contact lens to the aqueous environment such as during aqueous extraction and packaging using a buffered solution, the lens undergoes mass exchange with the contacting solution thus facilitating the redistribution of the mobile hydrophilic groups to the surface in contacting with the aqueous medium. The favorable interactions between the hydrophilic end groups and the aqueous medium induce segregation of the end groups to the exterior surfaces of the lens, a process that is thermodynamically driven by minimizing the interfacial energy. Interfacial energy is the Gibbs free energy at the interface of the device and the body fluid or body surface. Polymerizable group B may be selected from groups that can undergo free radical and/or cationic polymerization, condensation polymerization, ring opening polymerization and the like. As radical polymerization is predominately used in lens manufacturing, the preferred polymerizable groups are free radical reactive groups including (meth)acrylates, styryls, vinyls, vinyl ethers, C1-6 alkyl(meth)acrylates, (meth)acrylamides, C1-6 alkyl(meth)acrylamides, N-vinyllactams, N-vinylamides. More preferably, the polymerizable groups comprise (meth)acrylate, acryloxy, (meth)acrylamide, and mixtures thereof as described in formula (I) wherein R₁ is H or CH₃. As used herein "(meth)acrylate" includes both acrylate and methacrylate.

In one embodiment, the hydrophilic group containing silicone monomer comprises the compounds according to formula (II): 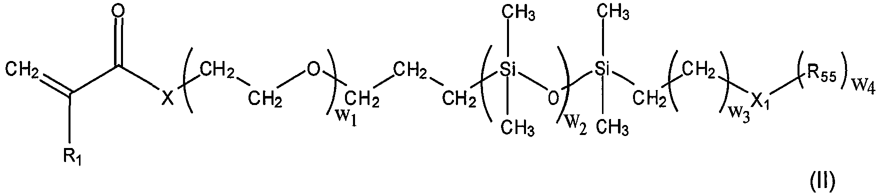 wherein, R₁ is H or CH₃, X is O or NR₅₄, where R₅₄ is H or a monovalent alkyl group with 1 to 4 carbons, W₁ is an integer from 0 to 10, W₂ is an integer from 2 to 100, W₃ is an integer from 1 to 6, X₁ is O or N, R₅₅ is H, ethanol (-CH₂CH₂OH), glycerol (-CH₂CH(OH)CH₂(OH)), and W₄ is 1 when X₁ is O; and R₅₅ is ethanol (-CH₂CH₂OH), straight or branched alkyl groups having 1 to 6 carbon atoms, aliphatic polyether, W₄ is 2 when X₁ is N.

Further disclosed is a silicone containing monomer which is a (meth)acrylate that has a terminal hydroxyl group attached to the monomer, as described in the formula (III): 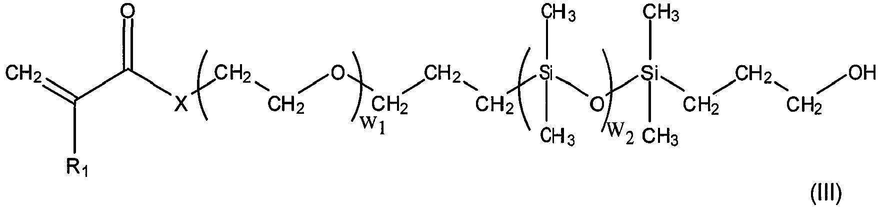 wherein, R₁ is H or CH₃, X is O or NR₅₄, where R₅₄ is H or a monovalent alkyl group with 1 to 4 carbons, W₁ is an integer from 0 to 10, W₂ is an integer from 2 to 100, more preferably 2 to 5.

In another embodiment, the hydrophilic group Z₁ is an ionic group attached to the end of silicone containing monomer according to formula (IV). 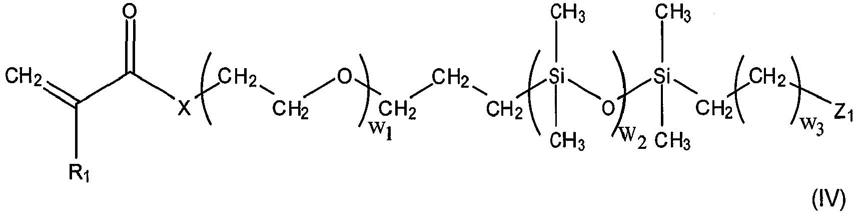 wherein, R₁ is H or CH₃, X is O or NR₅₄, where R₅₄ is H or a monovalent alkyl group with 1 to 4 carbons, W₁ is an integer from 0 to 10, W₂ is an integer from 2 to 100, W₃ is an integer from 1 or 6, Z₁ comprises a zwitterionic group represented by the formula (IV-C): 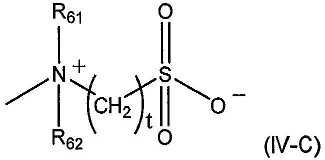 wherein R₆₁, R₆₂ are each independently selected from hydrogen or C1 to C4 alkyl, t is an integer from 1 to 4, more preferably 3; or a zwitterionic group represented by the formula (IV-D): 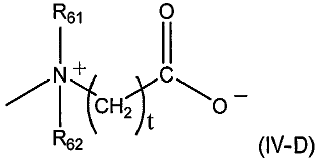 wherein R₆₁, R₆₂ are each independently selected from hydrogen or C1 to C4 alkyl, more preferably a methyl group, t is an integer from 1 to 4, more preferably 1.

In another embodiment, the silicone containing monomer has a quaternary amine end group Z₁ represented by (IV-E) 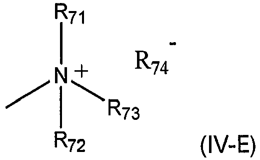 wherein (1) R₇₄ is a halide anion, sulfonate anion; (2) R₇₁, R₇₂, R₇₃ are each independently selected from the group consisting of straight or branched alkyl groups having 1 to 22 carbon atoms and substituted or unsubstituted phenyl or benzyl rings, aliphatic esters, aliphatic polyether, fluorinated aliphatic polyether, silicone, silicone polyether; (3) R₇₂, R₇₃ may either be (a) taken together with N to form a saturated or unsaturated heterocyclic ring of from 5 to 7 atoms; (b) taken together with N, and combined with oxygen atoms to form an N-morpholino group; or where (4) R₇₁, R₇₂, R₇₃ and N, taken together, represent quinoline, isoquinoline or hexamethylene tetramine. In a preferred embodiment at least one of R₇₁, R₇₂, R₇₃, is an alkyl group having 1-18 carbon atoms.

Bacterial adhesion onto the surface and subsequent biofilm formation are critical issues for many biomedical devices and their applications. For example, device associated infection may occur and compromise the benefit of using medical devices. One way to reduce or to prevent biofilm formation is to reduce the initial adhesion of bacteria to a surface by surface modification with hydrophilic agents, among which a zwitterionic group containing surface was found to be effective in reducing bacteria adhesion (Gang Cheng et al., Biomaterials, Volume 28, Issue 29, October 2007, Pages 4192-4199). Quaternary amine is commonly used as an active biocidal agent in medical products including wound dressings, lens care solutions, and other antiseptic products, incorporating a quaternary amine group to the reactive silicone containing monomer providing antimicrobial properties to the surface of medical products made therefrom, for example contact lenses.

The silicone segment of the silicone containing monomer may be branched or substituted with an alkyl or phenyl group. It is preferred that the hydrophilic group is at the terminal end of substituents R₅₁, R₅₂, R₅₃ is away from the polymerizable functional group such that the steric hindrance of the substituents next to the hydrophilic group is minimized to facilitate re-orientation of the hydrophilic groups. For example, 2-(trimethylsiloxy)-1,1,5,5-tetramethyltrisiloxane (CAS#17082-46-1, b.p. 164 °C) is commercially available and can be used in the synthesis of the silicone containing monomers. Examples of silicone containing monomers based on the branched 2-(trimethylsiloxy)-1,1,5,5-tetramethyltrisiloxane include compounds based on formula (V): 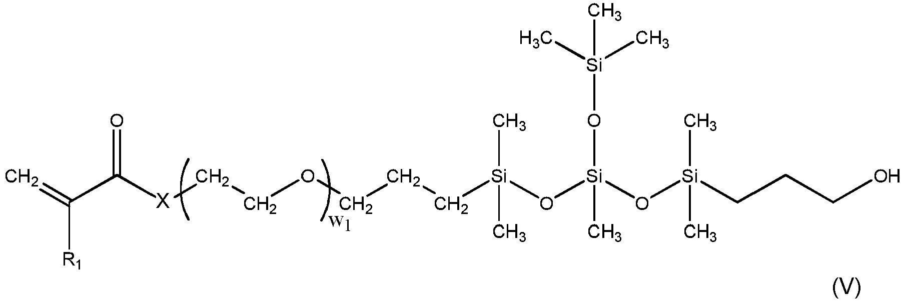 wherein, R₁ is H or CH₃, X is O or NR₅₄, where R₅₄ is H or a monovalent alkyl group with 1 to 4 carbons, W₁ is an integer from 0 to 10.

Branched silicone disilanes that can be used instead of 2-(trimethylsiloxy)-1,1,5,5-tetramethyltrisiloxane include, as examples, 1,3-tetrakis(trimethylsiloxy)disilane and 1,3-bis(trimethylsiloxy)-1,3-dimethyldisiloxane (CAS#16066-09-4) illustrated below.

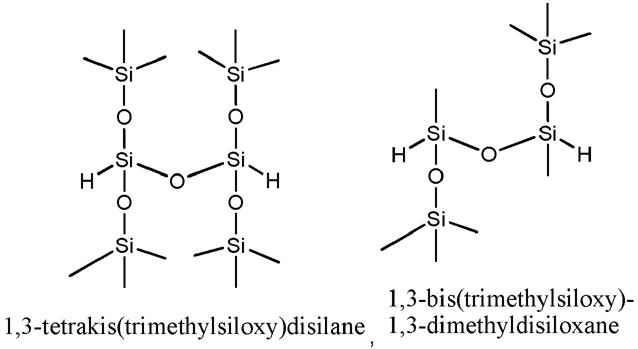

The process of producing silicone containing reactive monomers with hydrophilic end-groups of formula (I) involves two steps of hydrosilylation reactions.

The first step of reaction comprises the step of reacting, in the presence of a hydrosilylation catalyst, a first reaction mixture comprising one disilane and at least one hydrophilic group containing or hydrophilic group forming compound with a vinyl functional group capable of performing a hydrosilylation reaction. In carrying out the synthesis, instead of reacting with a hydrophilic group containing vinyl functional compound, one may chose to select a precursor that contains a functional group capable of reacting with a hydrophilic group forming agent for practical reasons such as to avoid side reactions, facilitate a chemical reaction, and to improve the yield.

A disilane is defined as a silane molecule or a silicone molecule containing two Si-H bonds. Examples of disilanes are the branched disilanes as described above and hexamethylsiloxane.

The hydrophilic group may be protected temporary by a protecting agent and prior to the hydrosilylation reaction, and de-protected afterwards. A hydrophilic group forming compound is a compound capable of reacting with another compound to form a hydrophilic compound. In particular, the hydrophilic group forming compound may be selected from vinyl functional amines, vinyl functional epoxides, vinyl functional isocyanates.

For example, a hydrosilylation reaction of a disilane and a vinyl functional amine can be carried out in the presence of a suitable hydrosilylation catalyst to form an amine containing monosilane. The amine group thus attached can be used as a precursor to react with a sultone for example, to form a sulfo betaine group in the final compound. In comparison, the reaction of a disilane with a vinyl functional betaine compound may be difficult due to the drastic difference in polarity and solubility in a solvent.

The molar ratio of disilane to a hydrophilic group containing a vinyl functional compound is preferably 1:1 to 10:1 and more preferably 1.5:1 to 5:1 to increase the yield of the mono-hydrosilylation product. The reaction is preferably carried out in the presence of a hydrosilylation catalyst with or without an organic solvent at a reaction temperature of -20 °C to 70 °C, more preferably, -10 °C to 30 °C. Suitable organic solvents include hydrocarbons, chlorinated hydrocarbons, organosulphoxides, ethers, ketones, mixtures thereof and the like.

The second step of the reaction involves the hydrosilylation reaction of the resulting mono silane with a vinyl functional monomer containing a polymerizable group. The reaction may be carried out in a solventless system or in organic solvents in the presence of a hydrosilylation catalyst and optionally in the presence of a polymerization inhibitor. A monosilane is defined as a silane molecule or a silicone molecule containing one Si-H bond. A polymerizable group is a group as defined hereabove.

The hydrophilic group containing or hydrophilic group forming compound with a vinyl functional group used in the first step of the reaction and the vinyl functional monomer containing a polymerizable group used in the second step of the reaction are both referred to as vinyl functional monomer.

An inhibitor is a compound that is capable of reducing the rate of radical polymerization associated with the ethylenically unsaturated polymerizable group. Suitable inhibitors include methoxyphenol, butylated hydroxytoluene, mixtures thereof and the like. During the second step of the reaction the inhibitor may be used in an amount up to 10,000 ppm and preferably between 50 to 5,000 ppm based on the molar amount of the vinyl functional monomer. During the second step of the reaction the molar ratio of monosilane to the vinyl functional monomer is preferably 5:1 to 1:5 and more preferably 1:1 to 1:2. During the second step of the reaction it may be desirable to have an excess of the vinyl functional monomer to avoid the side reactions including O-silylation and silylation on the C=C of a methacrylate group and to increase the yield of the final product. The reaction is preferably carried out in the presence of a hydrosilylation catalyst with or without an organic solvent at a reaction temperature of-20 °C to 70 °C, more preferably, -10 °C to 30 °C. Suitable organic solvent includes hydrocarbons, chlorinated hydrocarbons, organosulphoxides, ethers, ketones, mixtures thereof and the like.

Suitable hydrosilylation reaction catalysts known to one skilled in the art include platinum compounds and rhodium compounds. Examples of useful catalysts include chloroplatinic acid, complexes of chloroplatinic acid with alcohols, aldehydes, and ketones, platinum-olefin complexes, platinum-vinyl siloxane complexes, platinum-phosphine complexes, platinum-phosphite complexes, dicarbonyl dichloroplatinum, platinum-hydrocarbon complexes, chlorotris(triphenylphosphine)rhodium(I) also know as Wilkinson's catalyst, rhodium(III) chloride, platinum supported on a solid carrier, rhodium supported on a solid carrier and mixtures thereof. During both reaction steps. the hydrosilylation catalyst is used in amounts between 5 ppm to 500 ppm and preferably between 10 ppm to 300 ppm based on the molar amount of the vinyl functional monomer.

Various purification methods known to one skilled in the art can be used in purifying the monosilane and final silicone containing reactive monomer compound, including distillation under normal or reduced pressure, solvent extraction, absorbent extraction, supercritical fluid extraction, and combinations thereof.

The silicone containing monomer of the present invention is preferably used in a composition to prepare an ophthalmic device, more preferably a silicone hydrogel contact lens. The silicone containing monomer is used in this composition in mixture with at least one ethylenically unsaturated comonomer. Preferably, the composition is a mixture of various monomers that are used in a typical contact lens composition. Examples of such monomers are trimethyl-silyl-propyl-methacrylate (Tris), 2-hydroxylethyl methacrylate (HEMA), N,N-dimethylacrylamide(DMA), tetraethyleneglycol dimethacrylate (TEGDMA) and azobisisobutyronitrile (AIBN).

More preferably the silicone containing monomer of the present invention is used to replace a certain amount of hydrophobic silicone monomer(s) in a composition for the preparation of ophthalmic devices. Examples of such hydrophobic silicone monomers are, for instance, described in US4153641. A part of, or the complete amount of, the hydrophobic silicone monomers in the compostion can be replaced with hydrophilic monomers which has an advantageous effect on the properties of the final ophthalmic device; for example on the wettability and lubricity.

The man skilled in the art will be able to find the optimum ratio between hydrophilic and hydrophobic silicone monomers in the composition and will be able to obtain an optimum balance between the bulk properties (oxygen permeability, mechanical properties, optical clarity) and surface properties (wettability, lubricity, biocompatibility) of the ophthalmic device.

The composition can also contain other components like, for example, lubricants, wetting agents and drugs.

Furthermore, another embodiment includes a composition comprising a polymer or polymer network produced by polymerization of a mixture of a silicone containing monomer with a hydrophilic end group as described above, with at least one ethylenically unsaturated co-monomer, lubricants, wetting agents, and drugs.

Another embodiment includes an article comprising a composition according to any of those embodiments disclosed above. In one embodiment, the article is a medical device. The medical device is preferably an ophthalmic device and more preferably an intraocular lens or a contact lens. In an additional embodiment, the contact lens is a silicone hydrogel contact lens.

The polymers of the present invention can thus provide particularly advantageous physical, chemical and biological properties to ophthalmic devices, more preferably to silicone hydrogel contact lenses. Examples of these properties include oxygen permeability, wettability, biocompatibility, physical strength, modulus, and optical requirements.

The permeability (*Dk*) of a specific gas through a material is the product of the diffusivity D times the solubility of the gas in that material. In a contact lens, the *Dk* value correlates how much oxygen a contact lens allows to permeate through and reach the cornea and therefore affects cornea health. The *Dk* can be measured, using an optical or electrochemical sensor using a diffusion cell, by the net volume of oxygen gas passing through unit area of sample contact lens material per unit time under specified conditions through contact lens material of unit thickness when subjected to unit pressure difference. Oxygen permeability is stated in units of 10-¹¹ (cm²/sec) (mlO₂/ [ml x mmHg]), or equivalently, 10⁻¹¹ (cm³ [O₂] x cm)/ (cm²x sec x mmHg)[American National Standard for Ophthalmics, ANSI Z80.20-2004, 8.18-Oxygen Permeability*].*

Wettability is a property that is related to the tear film formation and its stability as well as the lubricity which is associated with the movement of the lens and refreshment of the cornea. It is a measurement of how easy an aqueous medium can spread and wet the solid surface, often measured by contact angle [American National Standard for Ophthalmics, ANSI Z80.20-2004, 8.11-Contact Ang*le*]. A lower contact angle indicates a better wettability.

Biocompatibility refers to the ability of a biomaterial to perform its desired function with respect to a medical therapy, without eliciting any undesirable local or systemic effects in the recipient or beneficiary of that therapy, but generating the most appropriate beneficial cellular or tissue response in that specific situation, and optimising the clinically relevant performance of that therapy (David F. Williams, Biomaterials, Volume 29, Issue 20, July 2008, pages 2941-2953). Evidence of the biocompatibility of a material to be used for contact lenses must be established. Tests for this requirement should include tests for acute systemic toxicity, acute ocular irritation, cytotoxicity, and allergic response due to sensitization. Guidelines set forth by the FDA may be used for this assessment.

For medical devices in general and contact lenses in particular, adequate physical properties including strength and modulus are necessary to support the handling and integrity of the device. A low modulus for comfort and sufficient mechanical strength for handling is desirable. These physical-mechanical properties can be measured by standard testing on hydrated contact lens material *[*American National Standard for Ophthalmics, ANSI Z80.20-2004, 8.11- 8.14 Flexural strength, 8.16 Hardness, 8.17 Modulus of elasticity].

Lubricity is a surface characteristic measured by coefficient of friction of one surface against another. In a contact lens, lubricity is associated with how easy a lens can move on the cornea during blinks thereby refreshing the cornea surface and avoiding the lens sticking to the cornea. In general, a more wettable lens with high ion permeability bears high mobility and a lens with high mobility/lubricity is always desirable.

The ability to retain tear fluid can be measured by tear film break up time (TBUT), which is the elapsed time from the latest blink until the occurence of the first dry spot in the tear film. The tear film naturally begins to break up between blinks, exposing the contact lens surface to air, prompting dehydration of the lens and the cornea. Each blink of the eye renews the tear film, so if the TBUT is similar to the time between blinks (which is about 10 seconds), the ocular surface remains moist and healthy.

It is also beneficial if the contact lenses are resistant to nonspecific protein and lipid adsorption. In a silicone hydrogel lens, the hydrophobic silicone segments have the tendency to migrate toward, and be enriched at, the lens surface exposed to the air in an effort to minimize the surface free energy. The hydrophobic silicone has affinity to the lipids and proteins in the tear film causing excessive deposits and affecting optical clarity and lens wear comfort. This can be qualitatively measured by following the deposit and the penetration of fluorescent dye on lens.

Contact lenses in particular also need to be optically clear and have minimal color of the polymer that is used to prepare the contact lenses. Silicone monomers and hydrophilic monomers in contact lens formulation are generally immiscible and they tend to form distinct phases large enough to scatter the visible light. This can be minimized or avoided if an effective amount of a compatablizing agent is included in the lens formulation so that the size of the distinct phases is kept well below the wavelength of visible light. Measurement of light scattering in the visible light region provides an indication of the phase separation significant to a contact lens. The optical clarity of a contact lens can be evaluated by measuring the Spectral and luminous transmittances of a contact lens *[*American National Standard for Ophthalmics, ANSI Z80.20-2004, 8.10-Spectrual and luminous transmittances*].* The invention also comprises combinations of the embodiments that are described hereabove.

The present invention will be further understood by the following illustrative examples. These examples are meant only to suggest a method of practicing the invention and it is to be understood that the present invention is not limited to the examples.

### Examples

### Synthesis of silicone methacrylates with terminal hydroxyl group

A general procedure of synthesizing silicone methacrylate with a terminal hydroxyl group is described below: 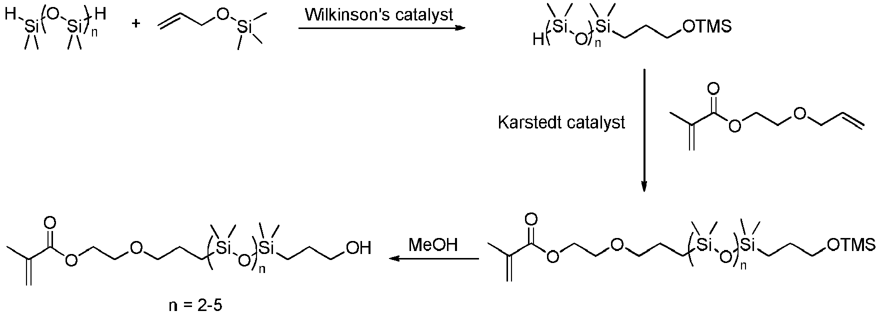 TMS is trimethylsiloxane.

### Specific Example 1:

The process can be better understood by the non-limiting example given for the specific n, where n=2.

### Step 1. Synthesis of trimethylsiloxy propyl hexamethyl-trisiloxane monosilane

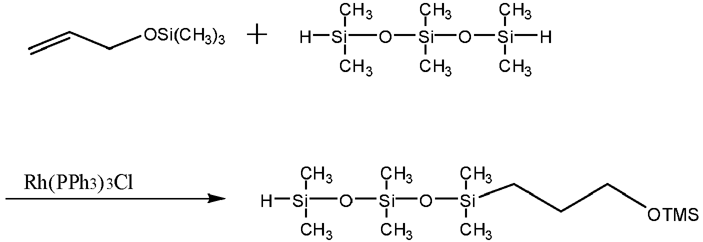

Into a 500 mL three neck round bottom flask fitted with an additional funnel, nitrogen blanket, and thermal couple were charged hexamethyltrisiloxane (commercial sample from Gelest), anhydrous toluene and Wilkinson's catalyst (tris(triphenylphosphine)rhodium(I) chloride) and the flask was then heated in a 45 °C oil bath. Allyloxytrimethylsilane (commercial sample obtained from TCI America) was transferred into the additional funnel and was added drop-wise over a period of 1 hour into the flask. After the addition, the reaction mixture was stirred in the 45 °C oil bath overnight under nitrogen atmosphere and FT-IR suggested the complete consumption of allyoxytrimethylsilane. The crude product, which was a clear, colorless liquid, was fractionally distilled to isolate and collect the desired trimethylsiloxy propyl hexamethyltrisiloxane at 75% yield.

### Step 2. Synthesis of methacryloxyethoxypropyl hexamethyl-trisiloxane propanol

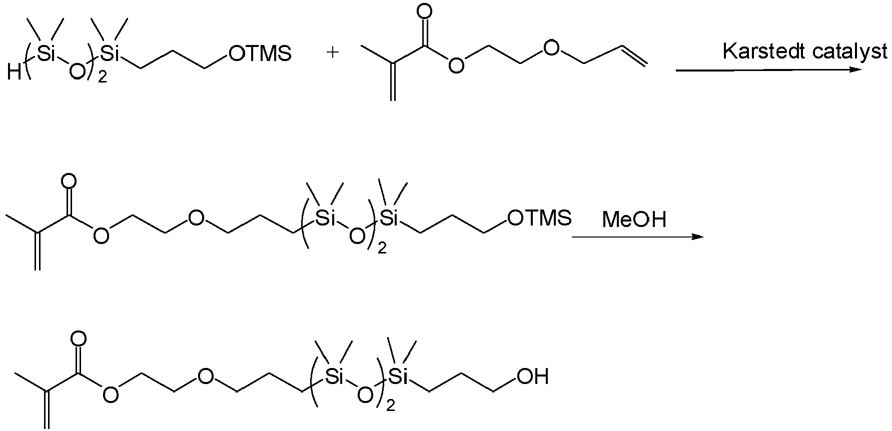

To a 250 mL three neck round bottom flask fitted with an addition funnel and a thermal couple under dry air blanket were charged allyloxyethyl methacrylate, hexanes, and Karstedt catalyst (an adduct formed by the reaction of divinyltetramethyldisiloxane with chloroplatinic acid (H₂PtCl₆)). The mixture was cooled in an ice/water bath and trimethylsiloxy propyl hexamethyl-trisiloxane was added in through an additional funnel in such a way that the temperature of the reaction mixture was kept between -5 to 50 °C. After the addition, the mixture was stirred at -5 to 50 °C under dry air overnight and FT-IR suggested the complete consumption of trimethylsiloxy propyl hexamethyl-trisiloxane. The crude mixture was stirred in 100 mL of methanol overnight. Purification of the deprotected product on silica gel using a mixture of hexanes/ethyl acetate as an eluent gave the desired product a 79 % yield. H¹ NMR: δ 6.11 (1 H), 5.54 (1 H), 4.26 (2H), 3.65 (2H), 3.55 (2H), 3.42 (2H), 1.92 (3H), 1.57 (4H), 0.51 (4H), 0.06 (12H), 0.00 (6H).

### Specific Example 2:

The same procedure was followed for the synthesis of terminal hydroxyl functional silicone methacrylate with a tetrasiloxane segment (n=3) using commercially available starting materials. H¹ NMR: δ 6.11 (1 H), 5.54 (1 H), 4.26 (2H), 3.65 (2H), 3.55 (2H), 3.42 (2H), 1.92 (3H), 1.57 (4H), 0.51 (4H), 0.06 (12H), 0.00 (12H).

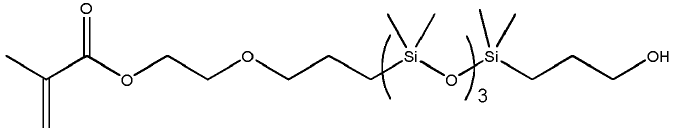

Other analogs of hydroxyl functional silicone methacrylate with a pentasiloxane segment (n=4) and a hexasiloxane segment (n=5) can be synthesized accordingly.

### Specific Example 3a:

The procedure as in specific Example 1 was followed for the synthesis of terminal di-hydroxyl functional silicone methacrylate with a tetrasiloxane segment (n=3) using the commercially available starting materials below. In this example, a TMS protected 3-allyl oxy-1,2-propanediol was used in replacement of allyoxytrimethylsilane. Upon de-protection, the final product methacryloxyethoxypropyl hexamethyl-trisiloxane propanoxy-1,2-propanediol was obtained.

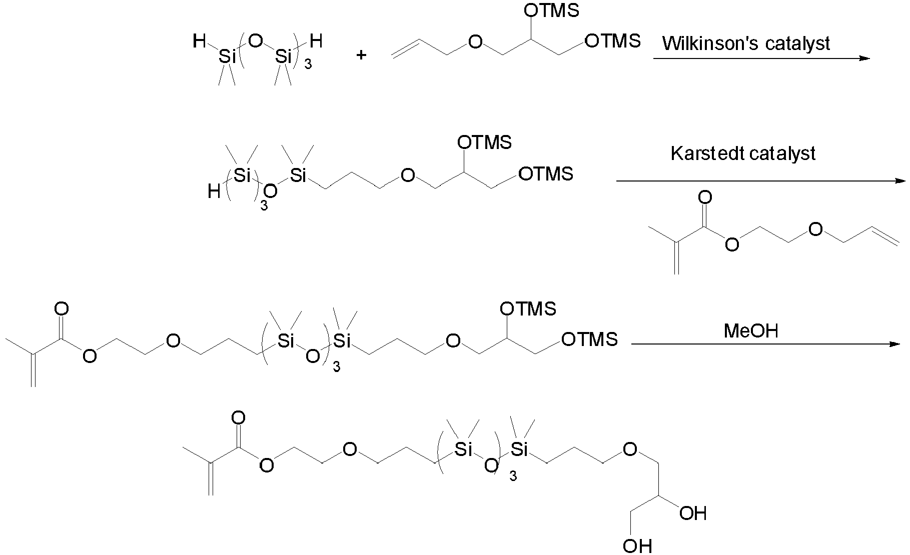

### Specific Example 3b:

An alternative synthesis route to prepare di-hydroxy functional silicone methacrylate is shown below. The second and third steps of the synthesis have been repeated a few times and a range of yields was obtained for each step as shown in the synthesis scheme.

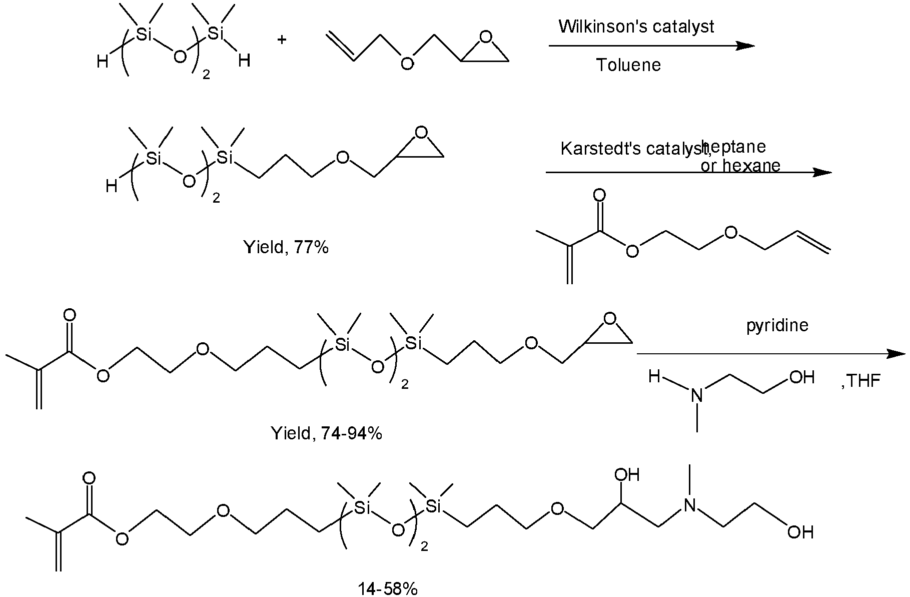

**Step 1:** To a three-neck round-bottom flask equipped with a condenser, addition funnel, magnetic stirrer, nitrogen inlet and outlet was added a solution of hexamethyltrisiloxane (299.45g, 1.44mol, GC purity: 99.1%) and Wilkinson's catalyst (87.2mg, 9.42X10⁻² mmol) in anhydrous toluene (120mL). The solution was heated to 40°C, into which was then added a solution of allyl glycidyl ether (65.24g, 0.57mol, GC purity: 99.6%) in anhydrous toluene (35mL) dropwisely. The mixture turned slightly cloudy over time. After the addition (the addition took 90mins) was finished, the mixture was stirred at 40°C for 17 hrs. It was observed that the mixture turned clear again. The mixture was then concentrated. Distillation of the residue under vacuum (75-85°C/0.9-1.35 Torr) gave epoxide terminated silane as a colorless liquid (140.6g, 0.44mol, yield: 77%, GC purity: 97.2%) ¹H NMR (CD₃OD) δ: 4.72(1H), 3.75(1H), 3.47(2H), 3.34-3.29(1 H), 3.13(1 H), 2.77(1 H), 2.59(1 H), 1.63(2H), 0.58(2H), 0.19-0.05(18H).

**Step 2:** To a three-neck round-bottom flask equipped with an addition funnel, magnetic stirrer, dry air inlet and outlet was added a solution of allyloxyethyl methacrylate (53.50g, 1.44mol, GC purity: 97.0%) and Karstedt's catalyst (2%Pt in xylene, 163mg, 8.5X10⁻³ mmol) in anhydrous heptane (70mL). The mixture was kept in an ice-water bath (8-12°C), and into the mixture was added epoxide terminated silane (50.62g, 156.9mmol, GC purity: 97.2%) dropwisely (addition took 40mins). The mixture was then kept in a fridge (3-5°C) for 12 hrs, into which was then added diethylethylenediamine (DEED, 0.2mL), and MEHQ (88.9mg, 0.7mmol). After that, the mixture was concentrated. Purification was performed on the crude residue using various purification methods (column chromatography and extraction). Totally 57.16g (116.0 mmol, yield: 74%) of epoxide terminated silicone methacrylate was isolated as a colorless liquid. ¹H NMR (CD₃OD) δ: 6.12(1 H), 5.63(1 H), 4.28(2H), 3.75(1 H), 3.69(2H), 3.47(4H), 3.31(1H), 3.13(1H), 2.77(1H), 2.58(1H), 1.94(3H), 1.62(4H), 0.58(4H), 0.10-0.04(18H).

**Step 3:** To a three-neck round-bottom flask equipped with a condenser, magnetic stirrer, dry air inlet and outlet was added a solution of 2-(methylamino)ethanol (1.70g, 22.6mmol), epoxide terminated silicone methacrylate (10.06g, 20.4mmol), and pyridine (1.64g, 20.7mmol). The solution was stirred at room temperature for 40min, then at 60C for 62 hours. TLC suggested that most of the limiting reactant epoxide terminated silicone methacrylate reacted to form a new spot. The mixture was then concentrated. Purification was performed on the crude residue using column chromatography (EtOAc) to give compound di-hydroxy containing silicone methacrylate (1.65g, 2.91 mmol, purity by NMR: ∼85%, yield 14%) as a liquid. ¹H NMR (CD₃OD) δ: 6.12(1 H), 5.63(1 H), 4.28(2H), 3.87(1 H), 3.70-3.62(4H), 3.49-3.40(6H), 2.65-2.48(4H), 2.33(3H), 1.94(3H), 1.64(4H), 0.57(4H), 0.10-0.04(18H).

### Comparative Example 4:

Tri-hydroxy functional silicone methacrylate can be prepared following the synthesis scheme below.

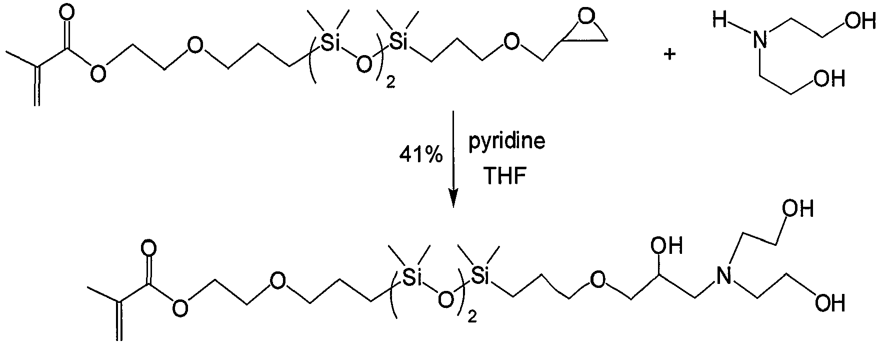

To a three-neck round-bottom flask equipped with a condenser, magnetic stirrer, dry air inlet and outlet was added a mixture of diethanolamine (2.38g, 22.6mmol), epoxide terminated silicone methacrylate (10.00g, 20.3mmol), and pyridine (1.62g, 20.5mmol) in anhydrous THF (20mL). The mixture was heated and formed a homogenous solution at 60C. The mixture was stirred at 60C for 44.5 hours, and TLC suggested that most of the limiting reactant epoxide terminated silicone methacrylate reacted to form a new spot. The mixture was then concentrated. Purification was performed on the crude residue using column chromatography (EtOAc) to give compound tri-hydroxy containing silicone methacrylate (5.0g, 8.36mmol, purity: ~96% based on NMR, yield 41%) as a liquid. ¹H NMR (CD₃OD) δ: 6.12(1H), 5.63(1 H), 4.28(2H), 3.83(1 H), 3.69(2H), 3.63-3.58(4H), 3.49-3.42(6H), 2.78-2.53(6H), 1.94(3H), 1.62(4H), 0.58(4H), 0.10-0.04(18H).

### Comparative Example 5:

The procedure as in specific Example 1 was followed for the synthesis of silicone methacrylate with a hydrophilic carboxylic acid end group and tetrasiloxane segment (n=3) using the commercially available starting materials below. In this example, 3-butenoic acid was used in replacement of allyoxytrimethylsilane to produce the final product methacryloxyethoxypropyl hexamethyl-trisiloxane 3-butenoic acid.

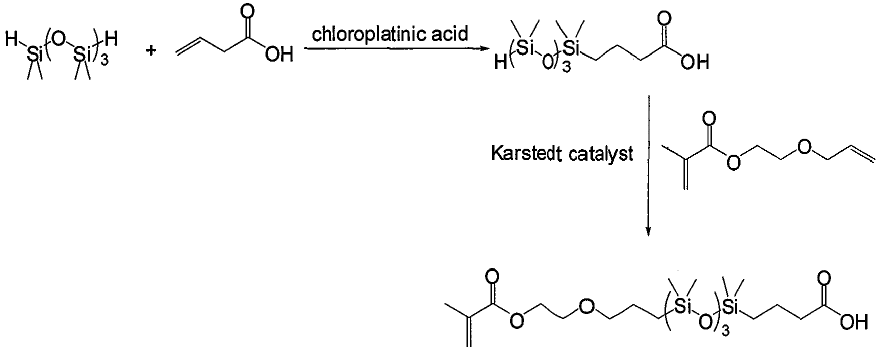

### Synthesis of tetrasiloxane methacrylate with a hydrophilic quaternary amine end group, sulfo betaine end group, or phosphorylethylammonium betaine end group

Generally, the synthesis of these tetrasiloxane methacrylates with ionic end groups can be performed in three steps. In the first step, dimethylpropyl amine tetrasiloxane monosilane was prepared from the hydrosilylation reaction of tetrasiloxane disilane and dimethylallyl amine in the presence of Karstedt's catalyst. An excess amount of disilane was used to ensure the high yield of mono hydrosilylation. In the second step, the dimethylpropylamine tetrasiloxane mono silane was allowed to react with allyloxyethyl methacrylate, again in the presence of a hydrosilylation catalyst to yield tetrasiloxane methacrylate with a dimethylpropylamine end group, which can serve as a precursor for the subsequent ionization reaction in a solvent (such as acetonitrile) with chloroethanol to form a quaternary amine end group; with 1,3-propane sultone at 50-60 °C to form a sulfopropylamonium betaine end group; and with 2-methoxy-2-oxo-1,3, 2-dioxaphospholane to form a phosphorylethylammonium betaine end group.

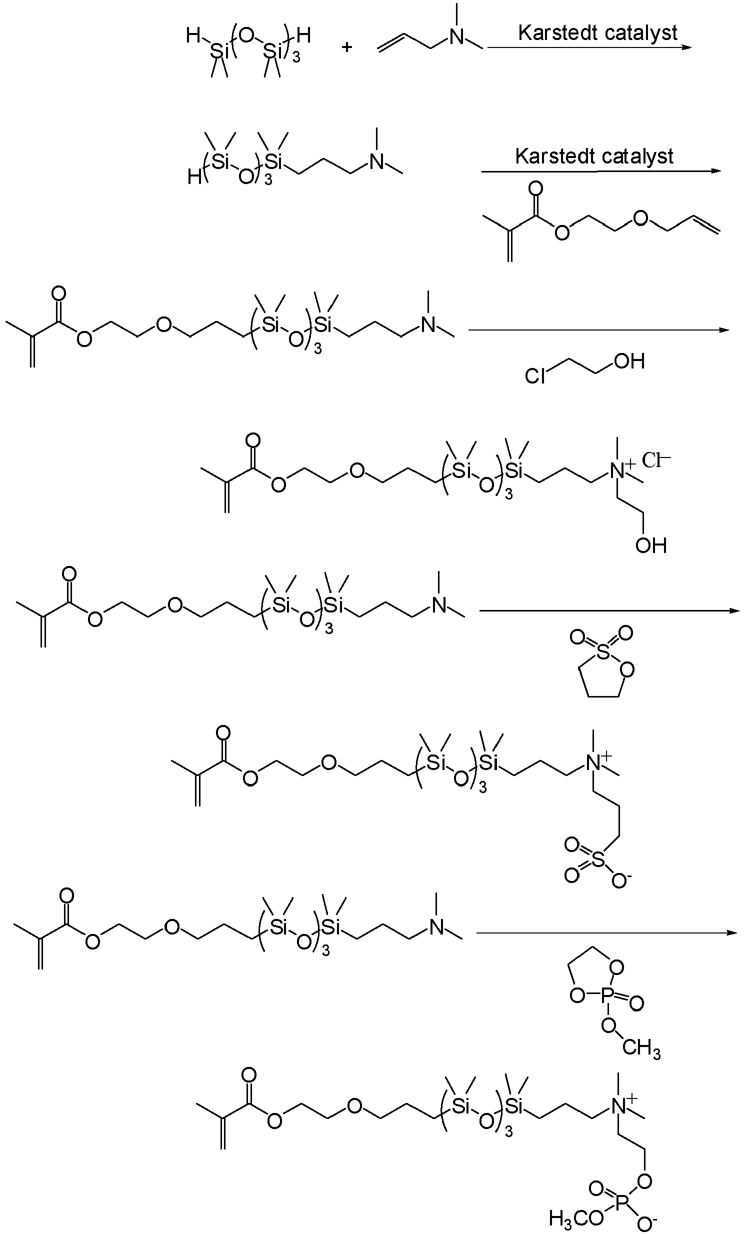

The process can be better understood by the non-limiting example given for the synthesis of tetrasiloxane methacrylate with a sulfopropylamonium betaine end group (Example 6A).

### Specific Example 6A:

### Experimental details for the synthesis of tetrasiloxane methacrylate monomer with a sulfopropylamonium betaine end group

To a 1 L three-neck round bottom flask equipped with a thermal couple, condenser, and additional funnel was charged a solution of a certain amount of Karstedt's catalyst in 150 ml of anhydrous pentane under a nitrogen blanket. To this solution was then added the mixture of 35 g N,N-dimethylallylamine and 245 g 1,1,3,3,5,5,7,7-octamethyltetrasiloxane dropwise over two hours. After the addition, the reaction mixture was stirred under nitrogen at room temperature overnight, followed by the removal of pentane under reduced pressure. The crude product was then fractionally distilled under vacuum and the fraction at 72-75 °C/700 mTorr was collected. 7.3 g of this product, 5.1 g allyoxylethylmethacrylate, and 5 mL of anhydrous pentane were then charged into a 100 mL round bottom flask. The flask was then sealed with a rubber septum and cooled in an ice/water bath for 15 min followed by the addition of a certain amount of Karstedt's catalyst using a syringe. The reaction mixture was then stirred in an ice/water bath overnight after which FT-IR suggested the complete consumption of silane. The crude product was then purified on silica gel using ethyl acetate/methanol as eluent to give 7.3 g of the product as a colorless liquid. 5.3 g of this methacrylate and 1.07 g propane sultone were dissolved in 5 mL anhydrous methylene chloride and the solution was then stirred at room temperature overnight. After precipitation from hexanes, the targeted methacrylate was obtained as a white semi-solid. ¹H NMR (CD₃OD) δ: 6.12(1 H), 5.63(1 H), 4.28(2H), 3.68(2H), 3.54-3.45(4H), 3.31 (2H), 3.09(6H), 2.87(2H), 2.19(2H), 1.94(3H), 1.80 (2H), 1.60 (2H), 0.58 (4H), 0.18-0.06 (24H).

### Comparative Example 6B:

### Synthesis of tetrasiloxane methacrylate monomer with a phosphorylcholine end group

The synthesis of tetrasiloxane methacrylate with a phosphorylcholine end group can be prepared from the hydroxyl group terminated tetrasiloxane methacrylate as described below:

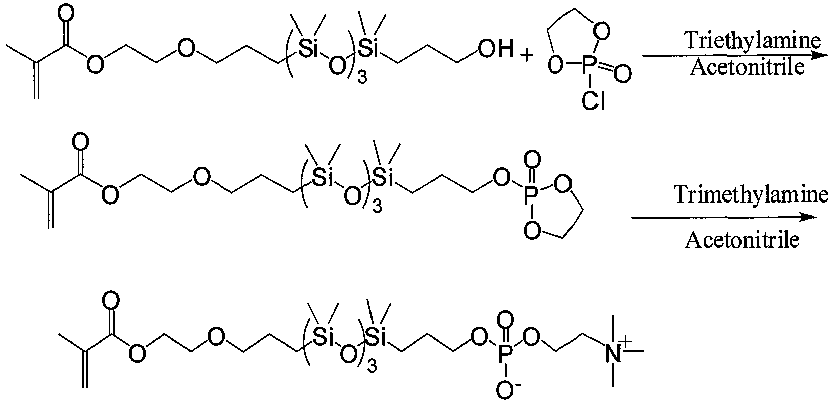

### Comparative Example 6C:

### Synthesis of tetrasiloxane methacrylate with quaternary ammonium salt end group

The tetrasiloxane methacrylate with a quaternary ammonium salt end group can be prepared from the dimethylamino terminated tetrasiloxane methacrylate as shown below: 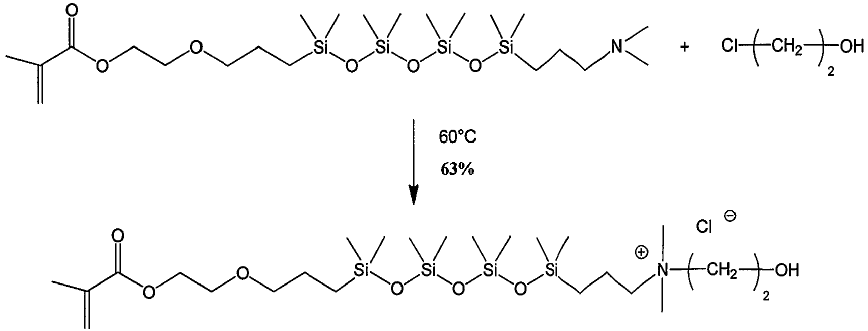 To a round-bottom flask equipped with a condenser, magnetic stirrer, and dry air purge was added dimethylamino terminated silicone methacrylate (10.11g, 18.8mmol) and chloroethanol (2.5mL, 3.01g, 37.3mmol). The reaction mixture was stirred at 60°C for 96 hours under dry air. Purification using silica gel column with hexane/ethyl acetate (1/1, v/v) as eluent gave quaternary ammonium salt terminated silicone methacrylate as a liquid. 1 H NMR (CD3OD) δ: 6.11 (1 H), 5.63(1 H), 4.27(2H), 3.98(2H), 3.69(2H), 3.48-3.35(6H), 3.16(6H), 1.94-1.90(3H), 1.81(2H), 1.64-1.59(2H), 0.60-0.56(4H), 0.18-0.05(24H).

### Comparative Example 7:

### Synthesis of tetrasiloxane methacrylate monomer with a sulfopropylamonium betaine end group covalently attached via urethane linkages

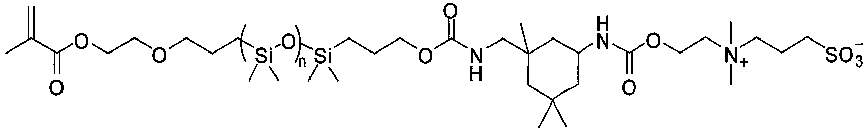

To a 100 mL RBF were added terminal hydroxyl functional silicone methacrylate from example 2 and distilled IPDI. The mixture was stirred at RT for two days. TLC suggested the complete consumption of the starting methacrylate. The reaction mixture was then cooled in an ice/water bath and to the flask was added N,N-dimethylethanolamine. The resulting mixture was stirred in an ice/water bath overnight and FI-IR showed the complete consumption of isocyanate. The crude product was then purified on silica gel using ethyl acetate/methanol as an eluent to give the tertiary amine functional silicone methacrylate as a colorless viscous liquid in 69 % yield. This methacrylate was then dissolved in anhydrous dichloromethane. To this solution was then added propane sultone and the solution was stirred at room temperature for two days. Removal of solvent under reduced pressure gave the final betaine containing silicone monomer as a brittle solid.

### Examples 8-13:

### Preparation of lenses comprised of silicone hydrogel films containing monomers from Example 2 and/or Example 6A

Liquid monomer mixtures containing monomers from Example 2 and/or Example 6A as well as other monomers common to contact lens materials are mixed in proportion to the weight percent in table 1. The weight percent mentioned in table 1 is the weight % based on the total weight of the monomer mix. The monomer mix was placed in a polypropylene mold and heated at 80 °C for 50 min. Films are removed from the mold and extracted in a propanol/water mixture (1/1, v/v) and hydrated in de-ionized (DI) water for a minimum of 4 hours. The water content was measured by the weight difference between a hydrated and dry lens divided by the weight of a hydrated lens times 100%. A dry lens is the lens before hydration. Clarity was visually evaluated. As suggested by the data listed in Table 1, optically clear silicone hydrogel films with high silicone content and high water content can be prepared by using the silicone containing monomers of Example 2 and/or Example 6A. In addition, a silicone containing monomer with hydrophilic end groups can be an effective compatibilizer for the hydrophilic and hydrophobic ingredients in lens formulation, yielding an optically homogeneous composition as shown in Example 9 in comparison with Example 13.

TRIS is a hydrophobic ingredient in the lens formulation. The silicone containing monomers according to the invention comprise at least one hydrophilic group. Depending on the type of silicone containing monomer an improvement in the water content is observed when a part of the amount of TRIS is replaced by the silicone containing monomer or when the complete amount of TRIS is replaced by the silicone containing monomer. This shows the effect of the silicone containing monomers according to the invention on the wettability of contact lenses.

**TABLE 1**

| Example | Example 2 wt% | Example 6A wt% | TRIS wt% | HEMA wt% | DMA wt% | TEGDMA wt% | AIBN wt% | Water content (%) | clarity |
|---|---|---|---|---|---|---|---|---|---|
| 8 | 24.8 | 24.7 | 0 | 22.7 | 23.8 | 3.0 | 1.0 | 37 | clear |
| 9 | 25.0 | 0 | 25.0 | 21.9 | 24.1 | 3.0 | 1.0 | 27 | clear |
| 10 | 50.0 | 0 | 0 | 22.0 | 24.0 | 3.0 | 1.0 | 28 | clear |
| 11 | 0 | 24.8 | 25.2 | 22.0 | 24.0 | 3.0 | 1.0 | 40 | hazy |
| 12 | 0 | 49.8 | 0 | 22.3 | 23.8 | 3.1 | 1.0 | 40 | clear |
| 13 | 0 | 0 | 48.2 | 23.2 | 24.6 | 3.0 | 1.0 | N/A | opaque |

| | | | | | | | | | |
|---|---|---|---|---|---|---|---|---|---|
| Note: The following abbreviations were used for the compounds in the contact lens formulations in table 1. TRIS: Trimethyl-silyl-propyl-methacrylate HEMA: 2-hydroxylethyl methacrylate DMA: N,N-Dimethylacrylamide TEGDMA: Tetraethyleneglycol Dimethacrylate AIBN: Azobisisobutyronitrile | | | | | | | | | |

## Claims

1. A silicone containing monomer comprising a non-ionic end group, according to formula (II): 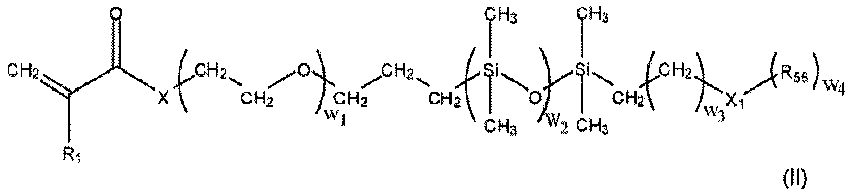 wherein, R₁ is H or CH₃, X is O or NR₅₄, where R₅₄ is H or a monovalent alkyl group with 1 to 4 carbons, W₁ is an integer from 0 to 10, W₂ is an integer from 2 to 100, W₃ is an integer from 1 to 6, X₁ is O or N, R₅₅ is H, ethanol (-CH₂CH₂OH), glycerol (-CH₂CH(OH)CH₂(OH)), and W₄ is 1 when X₁ is O; and R₅₅ is ethanol (-CH₂CH₂OH), straight or branched alkyl groups having 1 to 6 carbon atoms, aliphatic polyether, and W₄ is 2 when X₁ is N.

2. A silicone containing monomer comprising an ionic end group, according to formula (IV): 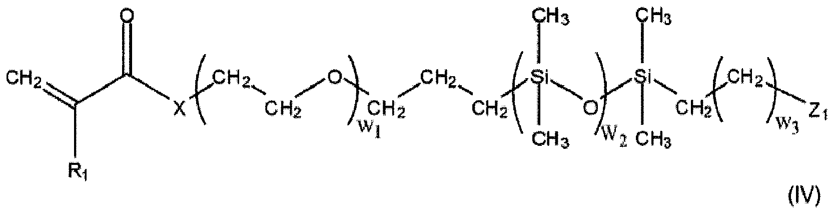 wherein, R₁ is H or CH₃, X is O or NR₅₄, where R₅₄ is H or a monovalent alkyl group with 1 to 4 carbons, W₁ is an integer from 0 to 10, W₂ is an integer from 2 to 100, W₃ is an integer from 1 to 6 and Z₁ comprises a zwitterionic group according to:
formula (IV-C): 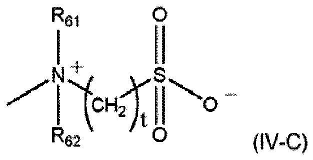 wherein R₆₁, R₆₂ are each independently selected from hydrogen or C1 to C4 alkyl, and t is an integer from 1 to 4; or
formula (IV-D): 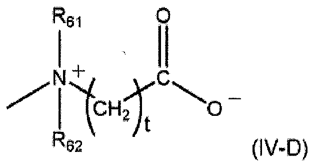 wherein R₆₁, R₆₂ are each independently selected from hydrogen or C1 to C4 alkyl, t is an integer from 1 to 4; or
formula (IV-E): 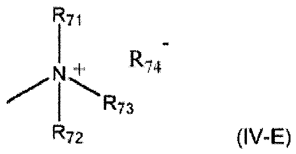 wherein (1) R₇₄ is a halide anion, sulfonate anion; (2) R₇₁, R₇₂, R₇₃ are each independently selected from the group consisting of straight or branched alkyl groups having 1 to 22 carbon atoms and substituted or unsubstituted phenyl or benzyl rings, aliphatic esters, aliphatic polyether, fluorinated aliphatic polyether, silicone, silicone polyether; (3) R₇₂, R₇₃ may either be (a) taken together with N to form a saturated or unsaturated heterocyclic ring of from 5 to 7 atoms; (b) taken together with N, and combined with oxygen atom to form N-morpholino group; or where (4) R₇₁, R₇₂, R₇₃ and N, taken together, represent quinoline, isoquinoline or hexamethylene tetramine.

3. A composition comprising a mixture of a silicone containing monomer according to any of claims 1 or 2, with at least one ethylenically unsaturated co- monomer.

4. A composition comprising a mixture of a silicone containing monomer according to any of claims 1 or 2, with at least one ethylenically unsaturated co-monomer, lubricants, wetting agents, and drugs.

5. A composition comprising a polymer or polymer network produced by polymerization of a mixture according to claim 3 or 4.

6. An article comprising a composition according to any of claims 3-5.

7. An article according to claim 6, wherein said article is an ophthalmic device.

## Patentansprüche

1. Siliconhaltiges Monomer mit nichtionischer Endgruppe gemäß Formel (II): 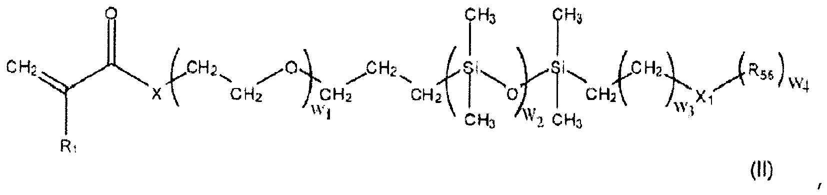 wobei R₁ für H oder CH₃ steht, X für O oder NR₅₄ steht, wobei R₅₄ für H oder eine einwertige Alkylgruppe mit 1 bis 4 Kohlenstoffen steht, W₁ für eine ganze Zahl von 0 bis 10 steht, W₂ für eine ganze Zahl von 2 bis 100 steht, W₃ für eine ganze Zahl von 1 bis 6 steht, X₁ für O oder N steht, R₅₅ für H, Ethanol (-CH₂CH₂OH), Glycerin (-CH₂CH(OH)CH₂(OH)) steht und W₄ für 1 steht, wenn X₁ für O steht; und R₅₅ für Ethanol (-CH₂CH₂OH), geradkettige oder verzweigte Alkylgruppen mit 1 bis 6 Kohlenstoffatomen, aliphatischen Polyether steht und W₄ für 2 steht, wenn X₁ für N steht.

2. Siliconhaltiges Monomer mit einer ionischen Endgruppe gemäß Formel (IV): 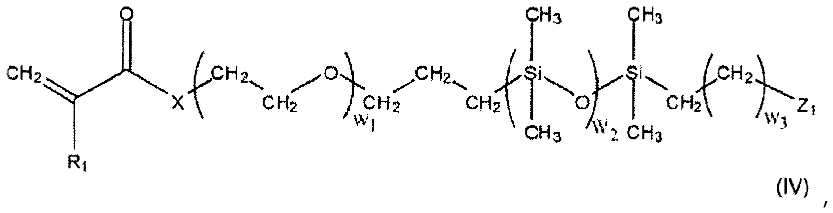 wobei R₁ für H oder CH₃ steht, X für O oder NR₅₄ steht, wobei R₅₄ für H oder eine einwertige Alkylgruppe mit 1 bis 4 Kohlenstoffen steht, W₁ für eine ganze Zahl von 0 bis 10 steht, W₂ für eine ganze Zahl von 2 bis 100 steht, W₃ für eine ganze Zahl von 1 bis 6 steht und Z₁ eine zwitterionische Gruppe gemäß 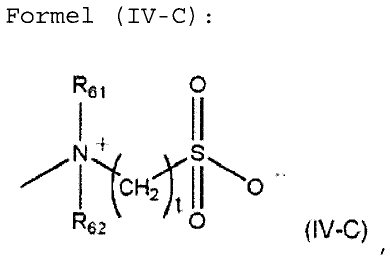 wobei R₆₁, R₆₂ jeweils unabhängig voneinander aus Wasserstoff und Cl- bis C4-Alkyl ausgewählt sind und t für eine ganze Zahl von 1 bis 4 steht; oder 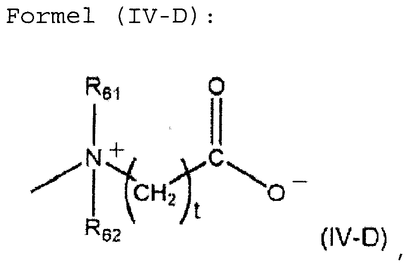 wobei R₆₁, R₆₂ jeweils unabhängig voneinander aus Wasserstoff oder Cl- bis C4-Alkyl ausgewählt sind und t für eine ganze Zahl von 1 bis 4 steht; oder 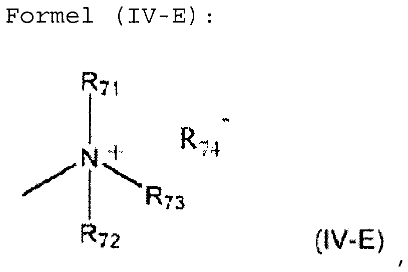 wobei (1) R₇₄ für ein Halogenidanion, Sulfonatanion steht; (2) R₇₁, R₇₂, R₇₃ jeweils unabhängig voneinander aus der aus geradkettigen oder verzweigten Alkylgruppen mit 1 bis 22 Kohlenstoffatomen und substituierten oder unsubstituierten Phenyl- oder Benzylringen, aliphatischen Estern, aliphatischen Polyethern, fluorierten aliphatischen Polyethern, Silicon, Siliconpolyethern bestehenden Gruppe ausgewählt sind; (3) R₇₂, R₇₃ entweder (a) zusammen mit dem N einen gesättigten oder ungesättigten heterocyclischen Ring mit 5 bis 7 Atomen bilden können; (b) zusammen mit N und in Kombination mit dem Sauerstoffatom eine N-Morpholinogruppe bilden können; oder wobei (4) R₇₁, R₇₂, R₇₃ und N zusammen für Chinolin, Isochinolin oder Hexamethylentetramin stehen, umfasst.

3. Zusammensetzung, umfassend eine Mischung eines siliconhaltigen Monomers nach einem der Ansprüche 1 oder 2 mit mindestens einem ethylenisch ungesättigten Comonomer.

4. Zusammensetzung, umfassend eine Mischung eines siliconhaltigen Monomers nach einem der Ansprüche 1 oder 2 mit mindestens einem ethylenisch ungesättigten Comonomer, Schmiermitteln, Netzmitteln und Arzneimitteln.

5. Zusammensetzung, umfassend ein durch Polymerisierung einer Mischung gemäß Anspruch 3 oder 4 hergestelltes Polymer oder Polymernetz.

6. Artikel, umfassend eine Zusammensetzung nach einem der Ansprüche 3-5.

7. Artikel nach Anspruch 6, wobei es sich bei dem Artikel um ein ophthalmisches Gerät handelt.

## Revendications

1. Monomère contenant une silicone comprenant un groupe terminal non ionique, répondant à la formule (II) : 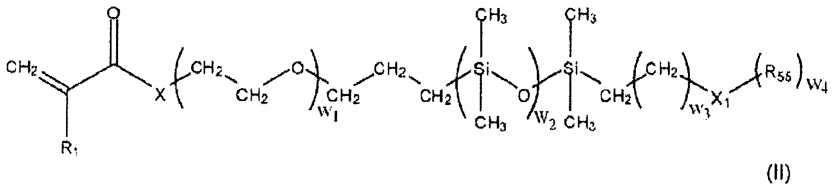 dans laquelle R₁ représente H ou CH₃, X représente O ou NR₅₄, où R₅₄ représente H ou un groupe alkyle monovalent avec 1 à 4 atomes de carbone, W₁ est un entier de 0 à 10, W₂ est un entier de 2 à 100, W₃ est un entier de 1 à 6, X₁ représente O ou N, R₅₅ représente H, l'éthanol (-CH₂CH₂OH) ou le glycérol (-CH₂CH(OH)CH₂(OH)) et W₄ vaut 1 quand X₁ représente O, et R₅₅ représente l'éthanol (-CH₂CH₂OH), des groupes alkyles linéaires ou ramifiés ayant 1 à 6 atomes de carbone ou le polyéther aliphatique et W₄ vaut 2 quand X₁ représente N.

2. Monomère contenant une silicone comprenant un groupe terminal ionique, répondant à la formule (IV) : 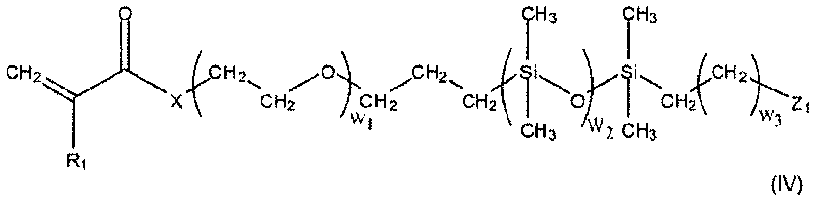 dans laquelle R₁ représente H ou CH₃, X représente O ou
NR₅₄, où R₅₄ représente H ou un groupe alkyle monovalent avec 1 à 4 atomes de carbone, W₁ est un entier de 0 à 10, W₂ est un entier de 2 à 100, W₃ est un entier de 1 à 6, et Z₁ comprend un groupe amphotère répondant à : la formule (IV-C) : 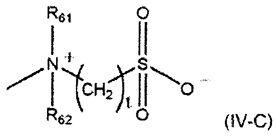 dans laquelle R₆₁ et R₆₂ sont chacun indépendamment choisis entre l'hydrogène et un groupe alkyle en C1 à C4, et t est un entier de 1 à 4 ; ou
la formule (IV-D) : 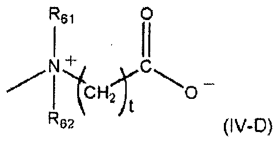 dans laquelle R₆₁ et R₆₂ sont chacun indépendamment choisis entre l'hydrogène et un groupe alkyle en C1 à C4, et t est un entier de 1 à 4 ; ou
la formule (IV-E) : 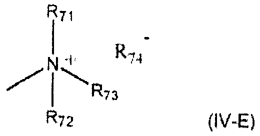 dans laquelle (1) R₇₄ représente un anion halogénure ou un anion sulfonate ; (2) R₇₁, R₇₂ et R₇₃ sont chacun indépendamment choisis dans le groupe constitué par les groupes alkyle linéaires ou ramifiés ayant 1 à 22 atomes de carbone, et les cycles phényle ou benzyle substitués ou non substitués, les esters aliphatiques, le polyéther aliphatique, le polyéther aliphatique fluoré, une silicone, et un polyéther de silicone ; (3) R₇₂ et R₇₃ peuvent être (a) considérés conjointement avec N pour former un noyau hétérocyclique saturé ou insaturé de 5 à 7 atomes ; (b) considérés conjointement avec N et combinés avec un atome d'oxygène pour former un groupe N-morpholino ; ou (4) R₇₂, R₇₂ et R₇₃, considérés ensemble, représentent la quinoline, l'isoquinoline ou l'hexaméthylènetétramine.

3. Composition comprenant un mélange d'un monomère contenant une silicone selon l'une quelconque des revendications 1 et 2, avec au moins un comonomère éthyléniquement insaturé.

4. Composition comprenant un mélange d'un monomère contenant une silicone selon l'une quelconque des revendications 1 et 2, avec au moins un comonomère éthyléniquement insaturé, des lubrifiants, des agents mouillants, et des médicaments.

5. Composition comprenant un polymère ou un réseau polymère produit par polymérisation d'un mélange selon la revendication 3 ou 4.

6. Article comprenant une composition selon l'une quelconque des revendications 3 à 5.

7. Article selon la revendication 6, ledit article étant un dispositif ophtalmique.
